# EUROPEAN PATENT SPECIFICATION

(11) **EP 3 964 705 B1**
(45) Date of publication and mention of the grant of the patent: **28.06.2023**
(21) Application number: 21178531.6
(22) Date of filing: 09.06.2021
(51) Int. Cl.: F03D 7/02, F03D 80/00

(54) **TILT CORRECTION DEVICE FOR WIND POWER GENERATOR**
NEIGUNGSKORREKTURVORRICHTUNG FÜR EINE WINDENERGIEANLAGE
DISPOSITIF DE CORRECTION D'INCLINAISON POUR UNE ÉOLIENNE

(30) Priority: 03.09.2020 KR 20200112555
(43) Date of publication of application: 09.03.2022
(73) Proprietor: Kepco Engineering & Construction Company, Inc., Gimcheon-si Gyeongsangbuk-do 39660 (KR)
(72) Inventor: KIM, Joo Young, 10361 Gyeonggi-do (KR)
(74) Representative: J A Kemp LLP

(56) References cited:
- JP-A- 2014 025 434
- US-A1- 2013 302 139

## Description

The present disclosure relates to a tilt correction device for a wind power generator, and particularly, to a tilt correction device capable of correcting a tilt so that a blade of a wind power generator faces wind.

A prior art tilt correction system is disclosed e.g. in US 2013/302139 A1.

A floating-type wind power generator may be classified into a spar-type wind power generator, a semi-submerged-type wind power generator, and a tension-leg platform (TLP)-type wind power generator according to the type of a floating body. All these types are characterized in that a floating body is tilted by wind or waves. When a floating body is tilted, a tower of a wind power generator attached thereto is also tilted, thereby causing various problems in the wind power generator.

First, a wind power generator is designed so that a direction in which wind blows forms a straight line with a drive shaft coupled to a blade to increase power generation efficiency. However, when a tower is tilted, the horizontal axis of the wind power generator does not coincide with the direction of the wind, and thus, a swept area for power generation is reduced to cause the amount of power to be reduced.

Second, the wind power generator is designed to stop to maintain structural stability when a tilt angle in a horizontal direction exceeds a certain level, and when there are strong wind and waves, the number of times that power may not be generated is increased, and thus, a utilization rate and an availability rate are reduced.

Third, in order to solve the above problems, when a floating body is returned to a horizontal level by a ballasting tank, time is required to operate the ballasting tank, and excessive time is required for the floating body to return to the horizontal level, and further, additional power is consumed to operate the ballasting tank.

The present disclosure provides a tilt correction device for a wind power generator that rapidly corrects a tilt so that a blade of the wind power generator faces wind and is structurally stable.

In addition, the present disclosure provides a tilt correction device for a wind power generator capable of simultaneously performing both yawing (rotation) of the wind power generator and correction of a tilt in a horizontal direction.

Additional aspects will be set forth in part in the description which follows and, in part, will be apparent from the description, or may be learned by practice of the presented embodiments of the disclosure.

A tilt correction device for a wind power generator according to the invention includes a blade rotated by wind power, a nacelle portion configured to include a drive shaft connected to the blade and an electric generator connected to the drive shaft to generate electric power, a tower portion coupled to the nacelle portion, and a tilt adjustment portion configured to adjust the drive shaft that is horizontally placed to be tilted upward or downward, wherein a tilt of the blade is adjusted for the blade to face wind.

In addition, the tilt adjustment portion includes a support plate coupled to the tower portion in a horizontal direction, a first rotation shaft provided on one side of the support plate and configured to rotatably support the nacelle portion, and a first pressing portion provided on the other side of the support plate and configured to provide a force for the nacelle portion to rotate about a first rotation axis, wherein, when the force is applied by the first pressing portion, the support plate is maintained horizontally and the nacelle portion may be tilted while rotating about the first rotation axis.

In addition, the first pressing portion may be a hydraulic cylinder including one end coupled to the other side of the support plate and the other end coupled to a bottom surface of the nacelle portion.

In addition, the tilt correction device further includes a yawing drive portion provided on the support plate to yaw the nacelle portion with respect to the tower portion, a first gear portion provided on a third rotation shaft of the yawing drive portion, and a second gear portion provided in the tower portion and engaged with the first gear portion, wherein, in a state in which the first gear portion is engaged with the second gear portion, the yawing drive portion may operate to yaw the nacelle portion with respect to the tower portion.

The above and other aspects, features, and advantages of certain embodiments of the disclosure will be more apparent from the following description taken in conjunction with the accompanying drawings, in which:

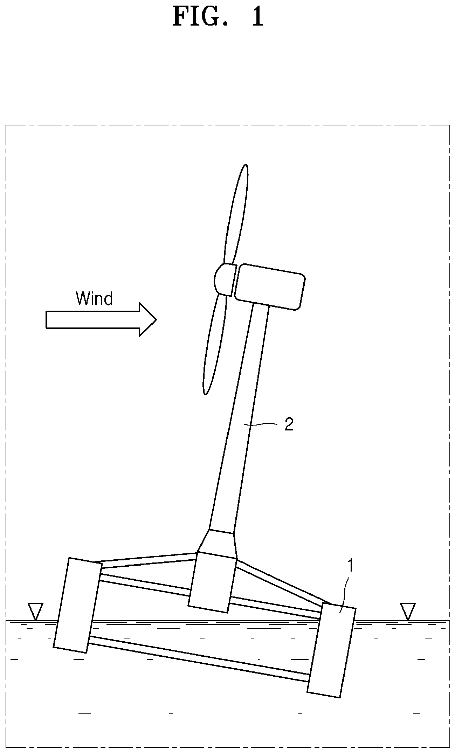

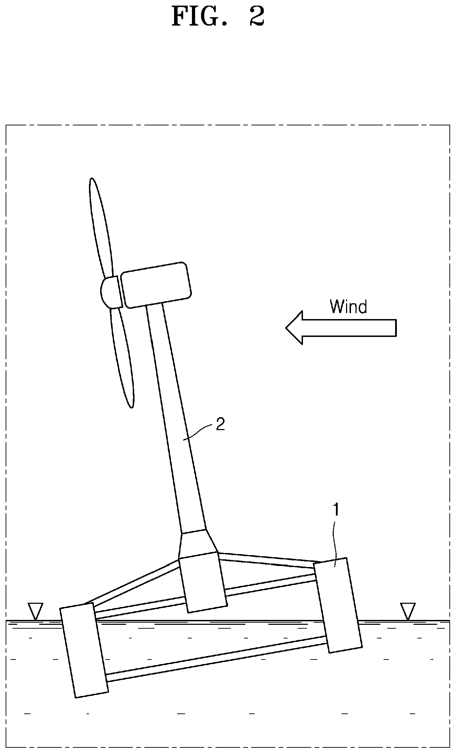

FIGS. 1 and 2 are views schematically illustrating a case in which a blade of a floating-type offshore wind power generator is tilted;
FIG. 3 is a cross-sectional view of a tilt correction device according to an embodiment of the present disclosure;
FIGS. 4 and 5 are views illustrating an operating state of FIG. 3;
FIG. 6 illustrates views of a state in which a tilt of a blade is corrected by a tilt correction device according to an embodiment of the present disclosure, in an upwind-type wind power generator;
FIG. 7 illustrates views of a state in which a tilt of a blade is corrected by a tilt correction device according to an embodiment of the present disclosure, in a downwind-type wind power generator;
FIG. 8 is a cross-sectional view of a tilt correction device according to another embodiment of the present disclosure;
FIGS. 9 and 10 are views illustrating an operation state of FIG. 8;
FIG. 11 is a block diagram according to the present disclosure; and
FIG. 12 is a flowchart according to the present disclosure.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. The invention is defined by the appended claims. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, various embodiments of the present disclosure will be described with reference to the accompanying drawings. Various embodiments of the present disclosure may be modified in various ways and include various other embodiments, and specific embodiments are illustrated in the drawings and detailed descriptions thereof are provided. In connection with description of the drawings, similar reference numerals are used for similar components.

Terms such as "include" and "may include" that may be used in various embodiments of the present disclosure refer to existence of a corresponding function, operation, or component that is disclosed, and do not limit an additional one or more functions, operations, components, or so on. In addition, in various embodiments of the present disclosure, terms such as "include" and "have" are intended to designate existence of features, numbers, steps, operations, configuration elements, components, or a combination thereof described in the specification, and should be understood that a possibility of the existence or addition of one or more other features, numbers, steps, operations, configuration elements, components, or a combination thereof is not preliminarily excluded.

When it is described that a component is "connected" or "coupled" to another component, the component may be directly connected or coupled to another component, but it should be understood that a new component may also be provided between the component and another component. Meanwhile, when it is described that a component is "directly connected" or "directly coupled" to another component, it should be understood that no new component is provided between the component and another component.

Terms used in various embodiments of the present disclosure are used only to describe a specific embodiment and are not intended to limit the various embodiments of the present disclosure. Singular expressions include plural expressions unless the context clearly indicates otherwise.

Unless otherwise defined, all terms that include technical and scientific terms and are used herein have the same meaning as commonly understood by a person of ordinary skill in the art to which various embodiments of the present disclosure belong.

Terms as defined in a commonly used dictionary should be construed as having a meaning consistent with the meaning in the context of the related technology and are not construed in ideal or excessively formal meaning unless explicitly defined in various embodiments of the present disclosure.

Hereinafter, example embodiments of the present disclosure will be described in detail with reference to the accompanying drawings.

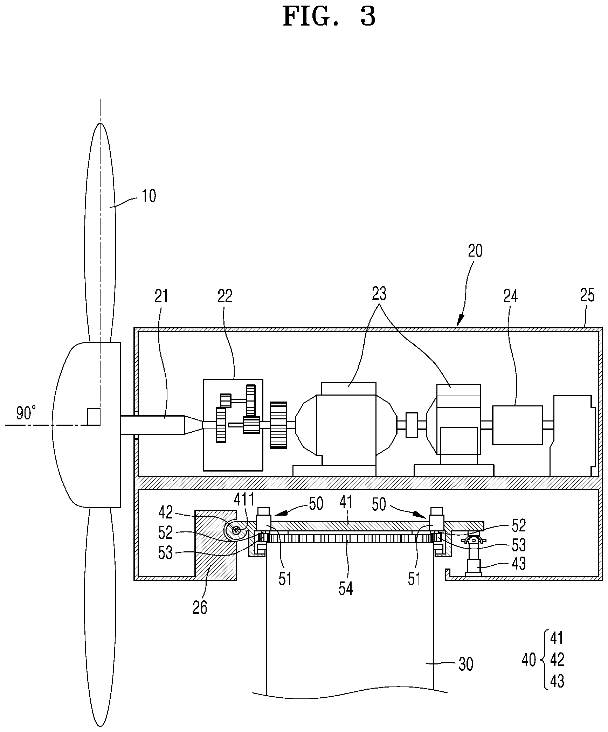

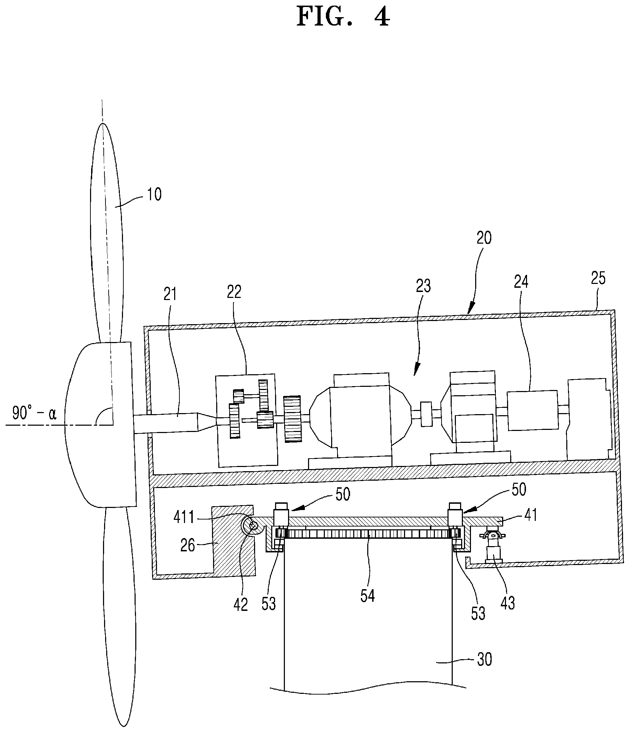

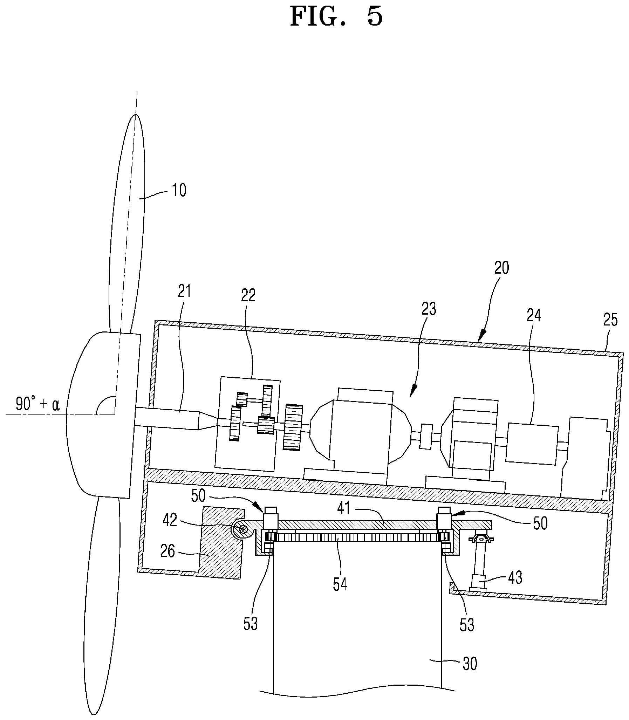

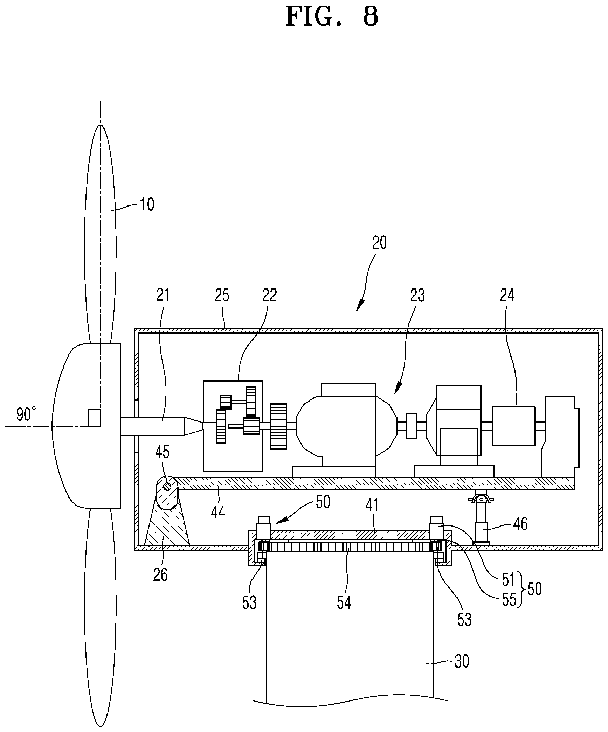

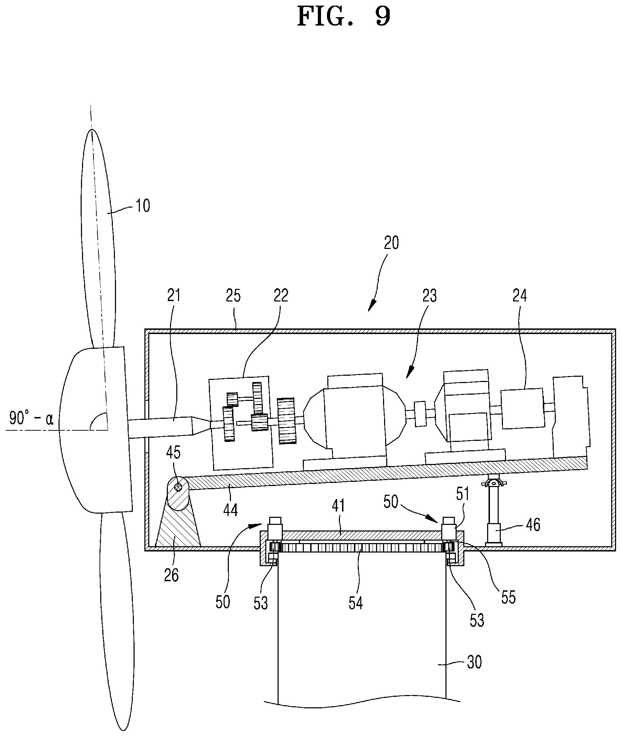

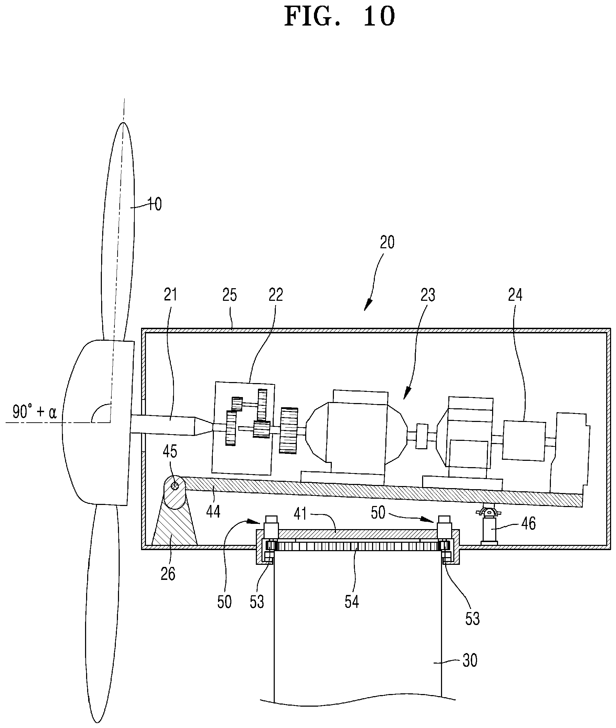

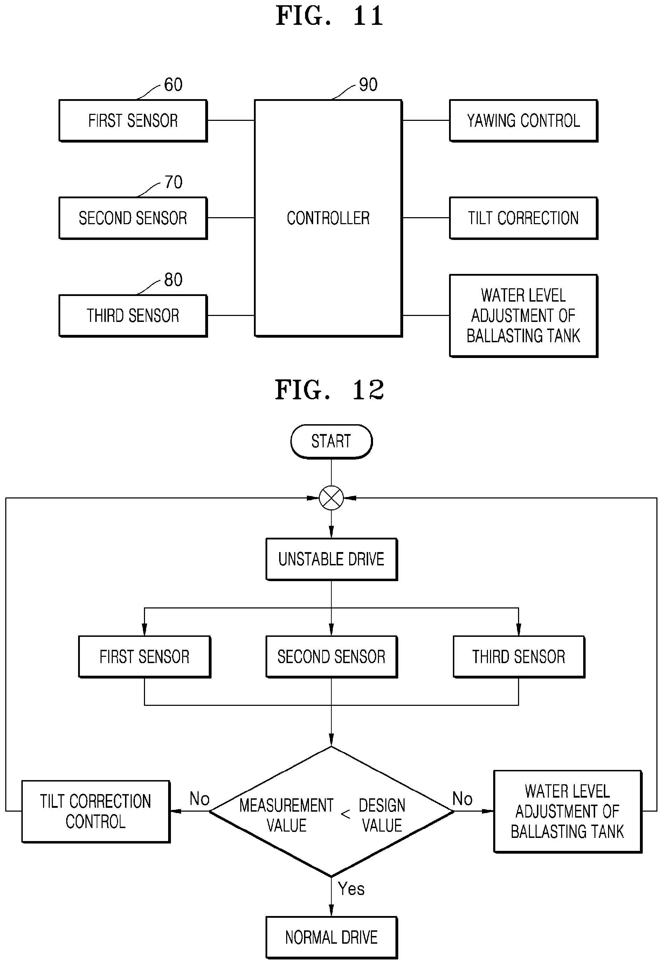

FIG. 3 is a cross-sectional view of a tilt correction device according to an embodiment of the present disclosure, FIGS. 4 and 5 are views illustrating an operation state of FIG. 3, and FIGS. 6 and 7 illustrate views of a state in which a tilt of a blade is corrected by a tilt correction device according to an embodiment of the present disclosure. FIG. 8 is a cross-sectional view of a tilt correction device according to another embodiment of the present disclosure, and FIGS. 9 and 10 are views illustrating an operation state of FIG. 8. FIG. 11 is a block diagram according to the present disclosure, and FIG. 12 is a flowchart according to the present disclosure.

A tilt correction device for a wind power generator according to the present disclosure corrects a tilt in a horizontal direction so that a blade of a wind power generator faces a direction of wind. In particular, according to the present disclosure, a tilt correction device for a floating-type wind power generator that floats on a water surface is provided to correct a tilt of a blade of the wind power generator in a wind direction, when a floating body for supporting the wind power generator is tilted with respect to a horizontal direction by waves or wind.

Referring to FIG. 3, a tilt correction device for a wind power generator according to the present disclosure includes a blade 10, a nacelle portion 20, a tower portion 30, and a tilt adjustment portion 40.

The blade 10 is rotated by wind power. The blade 10 is coupled to a front surface of the nacelle portion 20. The blade 10 may be a general blade used in a wind power generator.

The nacelle portion 20 includes a configuration for generating electricity by using a rotational force of the blade 10. The nacelle portion 20 includes a drive shaft 21 coupled to the blade 10, a gear portion 22 connected to the drive shaft 21, an electric generator 23 that is connected to the gear portion 22 to generate electric power by a rotational force, a power conversion unit 24 that converts the electric power produced by the electric generator 23, and so on. An internal configuration of the nacelle portion 20 may be formed of a known configuration.

The tower portion 30 is a portion to which the nacelle portion 20 is coupled and has a column shape extending in a vertical direction. The nacelle portion 20 is coupled to an upper side of the tower portion 30.

The tilt adjustment portion 40 is provided to adjust the drive shaft 21 of the nacelle portion 20 to be tilted upward or downward. When the drive shaft 21 is adjusted by being tilted upward or downward by the tilt adjustment portion 40, the tilt is adjusted to make the blade 10 face wind.
According to one embodiment of the present disclosure, the tilt adjustment portion 40 includes a support plate 41, a first rotation shaft 42, and a first pressing portion 43.

The support plate 41 is coupled to the tower portion 30. According to the present embodiment, the support plate 41 is provided on the upper side of the tower portion 30 in a horizontal direction. A width of the support plate 41 is formed to be greater than a width of the tower portion 30. Accordingly, one end and the other end of the support plate 41 are located outside the tower portion 30.

The first rotation shaft 42 rotatably supports the nacelle portion 20 on one side of the support plate 41. In the present embodiment, the first rotation shaft 42 is inserted through a through-hole 411 provided at one end of the support plate 41 to be fixed to the nacelle portion 20.

The first pressing portion 43 is provided on the other side of the support plate 41 and provides a force for the nacelle portion 20 to rotate about the first rotation shaft 42. When a force is applied by the first pressing portion 43, the nacelle portion 20 may be tilted while rotating about the first rotation shaft 42.

According to the present embodiment, the support plate 41 is fixed to an upper side of the tower portion 30. The first pressing portion 43 includes a hydraulic cylinder having one end coupled to the other side of the support plate 41 and the other end coupled to a bottom surface of the nacelle portion 20. When a rod of the hydraulic cylinder protrudes to change a distance between the other side of the support plate 41 and the nacelle portion 20, and when the distance between the other side of the support plate 41 and the nacelle portion 20 is changed, the nacelle portion 20 is rotated about the first rotation shaft 42 by a force applied to the support plate 41.

Although the first pressing portion 43 includes a hydraulic cylinder in the present embodiment, the first pressing portion 43 is not limited to the hydraulic cylinder and may also include other components capable of performing a function of rotating the support plate 41 by applying a force to the other side of the support plate 41. In this way, a tilt correction device for a wind power generator according to an embodiment of the present disclosure adjusts a tilt of the blade 10 so that the blade 10 faces wind by the tilt adjustment portion 40 to control the tilt of the blade 10 to an original state.

The tilt correction device for the wind power generator according to the embodiment of the present embodiment corrects a tilt by using the tilt adjustment portion 40 and enables yawing of the nacelle portion 20 to be performed also. The tilt correction device includes yawing drive portions 50, first gear portions 53, and a second gear portion 54 in order to enable yawing.

The yawing drive portions 50 provide power for yawing the nacelle portion 20 with respect to the tower portion 30 and are provided on the support plate 41. According to the present embodiment, the yawing drive portions 50 are provided in front of the support plate 41 to which the first rotation shaft 42 is coupled, and at the rear corresponding to the other side of the support plate 41, respectively. Each of the yawing drive portions 50 is a motor, and a body portion 51 thereof is coupled to the support plate 41, and a third rotation shaft 52 thereof extending from the body portion 51 protrudes in a downward direction of the support plate 41.

The first gear portions 53 are provided on the third rotation shaft 52. The second gear portion 54 is provided in the tower portion 30 and is engaged with the first gear portions 53. According to the present embodiment, the second gear portion 54 is provided on an upper side of the tower portion 30, and the first gear portions 53 are engaged with the second gear portion 54 on the outside of the second gear portion 54.

In a state in which the first gear portions 53 are engaged with the second gear portion 54, when the yawing drive portions 50 operate, the first gear portions 53 rotate, and the nacelle portion 20 yaws with respect to the tower portion 30 because the first gear portions 53 are engaged with the second gear portion 54. In this case, that the nacelle portion 20 yaws with respect to the tower portion 30 means that the nacelle portion 20 rotates in a clockwise or counterclockwise direction with respect to the center of the tower portion 30.

In addition, as illustrated in FIGS. 11 and 12, according to the present embodiment, a first sensor 60 for sensing a wind direction and a second sensor 70 for sensing a tilt of the blade 10 are provided. In addition, a controller 90 is provided which controls rotation of the nacelle portion 20 according to a wind direction sensed by the first sensor 60 and controls the first pressing portion 43 according to a tilt of the blade 10 sensed by the second sensor 70. When the wind direction is sensed by the first sensor 60, the controller 90 performs yawing of the nacelle portion 20 until a position of the nacelle portion 20 for a specific wind direction falls within a predetermined design range so that the blade 10 may meet the wind well. In addition, when the second sensor 70 detects that the blade 10 is tilted, the tilt of the blade 10 is adjusted to come within a predetermined design range.

In addition, the controller 90 controls correction of a tilt or yawing, and also controls a water level of a ballasting tank provided in a wind power generator. The controller 90 may receive a water level signal from a third sensor 80 for measuring the water level of the ballasting tank and control a water level adjustment pump for adjusting the water level of the ballasting tank to adjust the water level of the ballasting tank. Hereinafter, an operation of the embodiments of the present disclosure according to the above-described configuration will be described in detail.

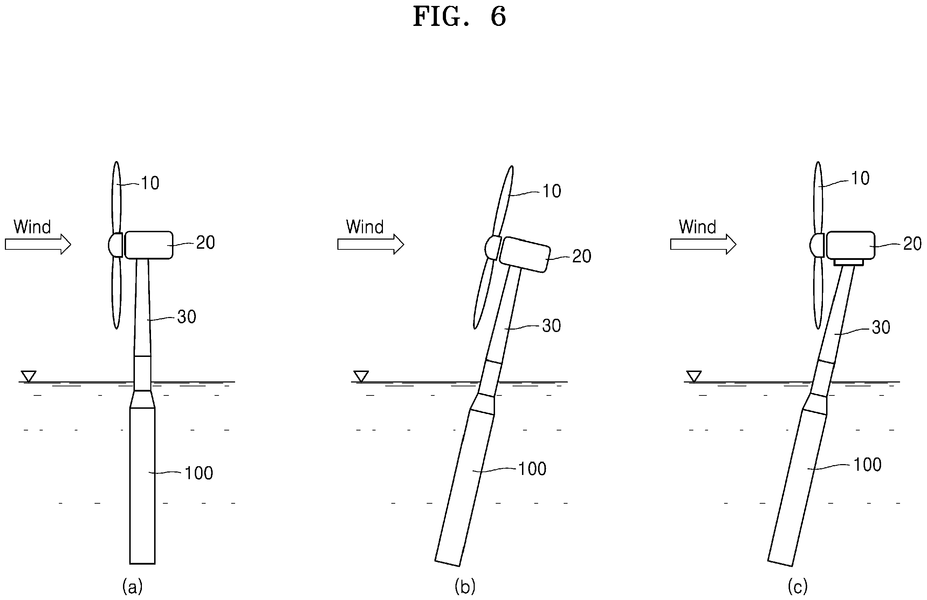

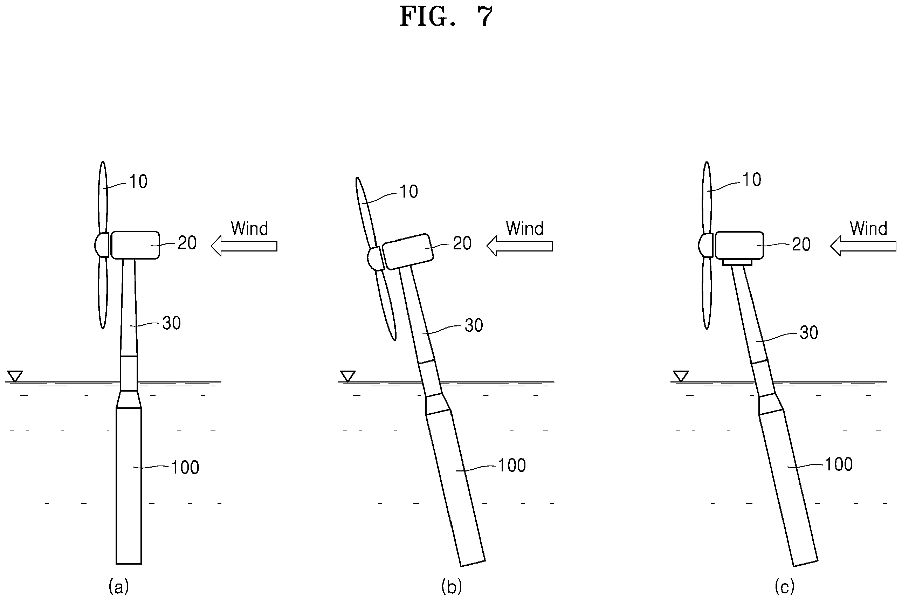

The floating-type wind power generator incudes a floating body 100 floating on a water surface, the tower portion 30 coupled to the floating body 100, the nacelle portion 20 coupled to the tower portion 30, and the blade 10 that is rotated by wind power and coupled to the nacelle portion 20. When the floating body 100 is rolled by a wave or wind, the blade 10 coupled to the nacelle portion 20 is tilted with respect to the horizontal direction. For example, in a case of an upwind-type wind power generator that receives a forward wind as illustrated in FIG. 6, the floating body 100 is tilted back by the wind blowing from the front, and thus, an angle between a reference line for the horizontal direction and the blade 10 may become an obtuse angle, or in a case of a downwind-type wind power generator that receives a back wind as illustrated in FIG. 7, the floating body 100 is tilted forward by the wind blowing from the back, and thus, an angle between the reference line for the horizontal direction and the blade 10 may become an acute angle. In this case, the present disclosure corrects a tilt of the blade 10 so that the blade 10 may meet the wind well. Although FIGS. 6 and 7 illustrate the floating body 100 of a spar type, the floating body to which the present disclosure is applied is not limited thereto, and a spar-type floating body, a semi- submersible-type floating body, and tension-leg platform (TLP)-type floating body may also be used.

Specifically, FIG. 4 illustrates a state in which a rod of a hydraulic cylinder is retracted so that a distance between the support plate 41 and a bottom surface of the nacelle portion 20 is close. The support plate 41 does not rotate about the tower portion 30, and when the rod of the hydraulic cylinder is retracted, the nacelle portion 20 rotates about the first rotation shaft 42 provided on one side of the support plate 41. As a result, a rear side of the support plate 41 becomes closer to the bottom surface of the nacelle portion 20, and a front side of the nacelle portion 20 rotates to be tilted downward. In this way, when it is necessary to correct an angle of the blade 10 by tilting downward with respect to a horizontal reference line, the rod of the hydraulic cylinder operates to be retracted. For example, referring to FIG. 6, when the blade 10 is pushed backward as illustrated in (b) of FIG. 6 in a state illustrated in (a) of FIG. 6, the rod of the hydraulic cylinder is retracted to return the blade 10 in a vertical direction as illustrated in (c) of FIG. 6.

FIG. 5 illustrates a state in which the rod of the hydraulic cylinder extends so that the distance between the support plate 41 and the bottom surface of the nacelle portion 20 is increased. In FIG. 5, an operation of the rod of the hydraulic cylinder is performed while extending and is substantially opposite to the operation of FIG. 4. Because the support plate 41 does not rotate about the tower portion 30, when the rod of the hydraulic cylinder extends, the hydraulic cylinder exerts a pushing force on the bottom surface of the nacelle portion 20, and thus, a distance between the rear of the support plate 41 and the bottom surface of the nacelle portion 20 is further increased. In this case, the front of the nacelle portion 20 rotates about the first rotation shaft 42 to be tilted upward. When it is necessary to correct an angle of the blade 10 by tilting the blade upward with respect to the horizontal reference line, the rod of the hydraulic cylinder operates to extend. For example, referring to FIG. 7, when the blade 10 is tilted forward as illustrated in (b) of FIG. 7 from the state of (a) of FIG. 7, the rod of the hydraulic cylinder protrudes, and thus, the blade 10 may be returned in a vertical direction.

In addition, according to the embodiment of the present disclosure, the tilt of the blade 10 may be corrected and also the nacelle portion 20 may be yawed. In a state in which the first gear portions 53 and the second gear portion 54 are engaged with each other, the yawing drive portions 50 may rotate the first gear portions 53 to rotate the nacelle portion 20 in a clockwise or counterclockwise direction.

As such, the tilt correction device for the wind power generator according to the embodiment of the present disclosure may rapidly return an angle of the blade 10 in a direction perpendicular to a horizontal reference line by using the tilt adjustment portion 40. As the first pressing portion 43 including a hydraulic cylinder pushes or pulls the other side of the support plate 41, the nacelle portion 20 rotates about the first rotation shaft 42, and thus, there is an effect that a tilt is rapidly corrected by a relatively simple structure. In addition, by arranging components for yawing on the support plate 41 and the tower unit 30 together, the nacelle portion 20 may be simultaneously yawed by a simplified structure.

Meanwhile, another embodiment according to the present disclosure will be described with reference to FIGS. 8 to 10. Referring to FIG. 8, a tilt correction device for a wind power generator according to the present embodiment differs from the embodiment of FIG. 3 in the tilt adjustment portion 40 and a portion for yawing.

The tilt adjustment portion 40 employed in the tilt correction device for the wind power generator according to the present embodiment includes a platform 44, a second rotation shaft 45, and a second pressing portion 46.

The platform 44 is arranged in the nacelle unit 20, and an electric generator is arranged on an upper side of the platform 44. In addition to the electric generator, a gear portion connected to the electric generator, a drive shaft 21 coupled to the blade 10, a power conversion unit 24 for converting power generated by the electric generator, and so on may be arranged on an upper surface of the platform 44.

The second rotation shaft 45 rotatably supports one side of the platform 44. The second rotation shaft 45 is coupled to a mounting block 26 provided inside the nacelle portion 20, and the platform 44 rotates about the second rotation shaft 45.

The second pressing portion 46 is provided to provide a force for the platform 44 to rotate about the second rotation shaft 45. That is, when a force is applied by the second pressing portion 46, the platform 44 is tilted while rotating about the second rotation shaft 45.

According to the present embodiment, the second pressing portion 46 includes a hydraulic cylinder having one end coupled to the other side of the platform 44 and the other end coupled to a bottom surface of the nacelle portion 20, similar to the embodiment of FIG. 3. The second pressing portion 46 pushes or pulls the other side of the platform 44 to rotate the platform 44 about the second rotation shaft 45. Although the second pressing portion 46 is implemented as a hydraulic cylinder in the present embodiment, the second pressing portion 46 is not limited to the hydraulic cylinder and may also be implemented as other components capable of performing a function of rotating the platform 44 by applying a force to the other side of the platform 44.

In addition, according to the present embodiment, yawing drive portions 50, first gear portions 53, and a second gear portion 54 are provided to yaw the nacelle portion 20 in addition to correct a tilt by using the tilt adjustment portion 40.

The yawing drive portions 50 are provided to provide power for yawing the nacelle portion 20 to the tower portion 30 and are provided on the support plate 41. The support plate 41 according to the present embodiment is coupled to an upper side of the tower portion 30. The support plate 41 is fixed to the upper side of the tower portion 30. In the present embodiment, the nacelle portion 20 is coupled to the support plate 41 unlike the embodiment of FIG. 3. Specifically, a case 25 constituting the nacelle portion 20 is coupled to the support plate 41.

According to the present embodiment, the yawing drive portions 50 are provided in front of the support plate 41 and at the rear of the support plate 41, respectively. Each of the yawing drive portions 50 is a motor, and a body portion 51 thereof is coupled to the support plate 41, and a fourth rotation shaft 55 thereof extending from the body portion 51 protrudes in a downward direction of the support plate 41.

The first gear portions 53 are provided on the fourth rotation shaft 55. The second gear portion 54 is provided in the tower portion 30 and is engaged with the first gear portions 53. According to the present embodiment, the second gear portion 54 is provided on an upper side of the tower portion 30, and the first gear portions 53 are engaged with the second gear portion 54 outside the second gear portion 54.

In a state in which the first gear portions 53 are engaged with the second gear portion 54, when the yawing drive portions 50 operate, and the first gear portions 53 rotate and the nacelle portion 20 yaws in a clockwise or counterclockwise direction with respect to the tower portion 30 because the first gear portions 53 are engaged with the second gear portion 54.

Hereinafter, an operation of the present embodiment will be described in detail with reference to FIGS. 9 and 10.

FIG. 9 illustrates a state in which a rod of a hydraulic cylinder protrudes. The case 25 of the nacelle portion 20 is coupled to the support plate 41, and the support plate 41 is fixed to an upper side of the tower portion 30. Accordingly, a tilt of the case 25 of the nacelle portion 20 is not changed in the horizontal direction. When the rod of the hydraulic cylinder extends, the platform 44 rotates about the second rotation shaft 45 while an opposite side of a point to which the second rotation shaft 45 is coupled is lifted. As a result, the tilt of the blade 10 is corrected by tilting an electric generator, the drive shaft 21, and so on arranged on the platform 44 together with the platform 44. When it is necessary to correct an angle of the blade 10 by tilting the blade 10 downward with respect to a horizontal reference line, a rod of a hydraulic cylinder is operated to-extend. For example, in a state in which the blade 10 is pushed back as illustrated in (b) of FIG. 6, the rod of the hydraulic cylinder extends to return the blade 10 in a vertical direction as illustrated in (c) of FIG. 6.

FIG. 10 illustrates a state in which the rod of the hydraulic cylinder is retracted. In FIG. 10, an operation of the rod of the hydraulic cylinder is performed while being retracted and is substantially opposite to the operation of FIG. 9. Because tilts of the support plate 41 and the case 25 of the nacelle portion 20 are not changed with respect to the tower portion 30, when the rod of the hydraulic cylinder is-retracted, the platform 44 rotates about the second rotation shaft 45 while an opposite side of a point to which the second rotation shaft 45 is coupled goes downward. As a result, the tilt of the blade 10 is corrected by tilting the electric generator, the drive shaft 21, and so on arranged on the platform 44 together with the platform 44. When it is necessary to correct an angle of the blade 10 by tilting the blade 10 upward with respect to the horizontal reference line, the rod of the hydraulic cylinder operates to be retracted. For example, in a state in which the blade 10 is tilted forward as illustrated in (b) of FIG. 7, the rod of the hydraulic cylinder is retracted to return the blade 10 in a vertical direction as illustrated in (c) of FIG. 7.

In addition, according to the embodiment of the present disclosure, the tilt of the blade 10 may be corrected and also the nacelle portion 20 may be yawed as in the embodiment of FIG. 3. In a state in which the first gear portions 53 and the second gear portion 54 are engaged with each other, the yawing drive portions 50 may rotate the first gear portions 53 to rotate the nacelle portion 20 in a clockwise or counterclockwise direction.

As such, the tilt correction device for the wind power generator according to the embodiment of the present disclosure may rapidly return an angle of the blade 10 in a direction perpendicular to a horizontal reference line by using the tilt adjustment portion 40. As the second pressing portion 46 including a hydraulic cylinder pushes or pulls the other side of the platform 44, the nacelle portion 20 rotates about the second rotation shaft 45, and thus, there is an effect that a tilt is rapidly corrected by a relatively simple structure. In addition, by arranging components for yawing on the support plate 41 and the tower portion 30 together, the nacelle portion 20 may be simultaneously yawed by a simplified structure.

As described above, the present disclosure is described in detail with respect to the example embodiments, but the present disclosure is not limited to the above embodiments, and various modifications may be provided within the scope of the present disclosure.

A tilt correction device for a wind power generator according to the present disclosure provides an effect of rapidly correcting a tilt so that a blade of the wind power generator faces wind.

In addition, a wind power generator according to the present disclosure may be structurally stable, may correct a tilt in a horizontal direction with a relatively simple configuration, and provide an economical effect of implementing a tilt correction device at a low cost.

In addition, the present disclosure provides an effect of simultaneously performing yawing (rotation) of a wind power generator and correction of a tilt in a horizontal direction. By combining a yawing portion with a tilt correction portion, an effect of simplifying an internal structure of a nacelle may be provided.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the disclosure as defined by the following claims.

## Claims

1. A tilt correction device for a wind power generator, the tilt correction device comprising:
a blade (10) rotated by wind power;
a nacelle portion (20) configured to include a drive shaft (21) connected to the blade (10) and an electric generator (23) connected to the drive shaft (21) to generate electric power;
a tower portion (30) coupled to the nacelle portion (20); and
a tilt adjustment portion (40) configured to adjust the drive shaft (21) that is horizontally placed to be tilted upward or downward,
wherein a tilt of the blade (10) is adjusted for the blade (10) to face wind,
**characterized in that**
the tilt adjustment portion (40) comprises:
a support plate (41) coupled to the tower portion (30) in a horizontal direction; wherein
the tilt adjustment portion (40) further comprises:
a first rotation shaft (42) provided on one side of the support plate (41) and configured to rotatably support the nacelle portion (20); and
a first pressing portion (43) provided on the other side of the support plate (41) and configured to provide a force for the nacelle portion (20) to rotate about a first rotation axis, and
when the force is applied by the first pressing portion (43), the support plate (41) is maintained horizontally and the nacelle portion (20) is tilted while rotating about the first rotation axis,
wherein the tilt correction device further comprises:
a yawing drive portion (50) provided on the support plate (41) to yaw the nacelle portion (20) with respect to the tower portion (30);
a first gear portion (53) provided on a third rotation shaft (52) of the yawing drive portion (50); and
a second gear portion (54) provided in the tower portion (30) and engaged with the first gear portion (53),
wherein, in a state in which the first gear portion (53) is engaged with the second gear portion (54), the yawing drive portion (50) operates to yaw the nacelle portion (20) with respect to the tower portion (30).

## Patentansprüche

1. Neigungskorrekturvorrichtung für einen Windkraftgenerator, wobei die Neigungskorrekturvorrichtung Folgendes umfasst:
einen Flügel (10), der durch Windkraft gedreht wird,
einen Gondelabschnitt (20), der dafür konfiguriert ist, eine Antriebswelle (21) zu enthalten, die mit dem Flügel (10) verbunden ist, und einen elektrischen Generator (23), der mit der Antriebswelle (21) verbunden ist, um elektrische Energie zu erzeugen;
einen Turmabschnitt (30), der mit dem Gondelabschnitt (20) verbunden ist; und
einen Neigungseinstellabschnitt (40), der dafür konfiguriert ist, die Antriebswelle (21), die horizontal angeordnet ist, so einzustellen, dass sie nach oben oder nach unten geneigt wird,
wobei eine Neigung des Flügels (10) so eingestellt wird, dass der Flügel (10) dem Wind zugewandt ist,
**dadurch gekennzeichnet, dass** der Neigungseinstellabschnitt (40) Folgendes umfasst:
eine Trägerplatte (41), die mit dem Turmabschnitt (30) in horizontaler Richtung gekoppelt ist;
wobei der Neigungseinstellabschnitt (40) ferner Folgendes umfasst:
eine erste Drehwelle (42), die auf einer Seite der Trägerplatte (41) vorgesehen und dafür konfiguriert ist, den Gondelabschnitt (20) drehbar zu lagern; und
einen ersten Druckabschnitt (43), der auf der anderen Seite der Trägerplatte (41) vorgesehen und dafür konfiguriert ist, eine Kraft für den Gondelabschnitt (20) bereitzustellen, damit dieser sich um eine erste Drehachse dreht, und
wobei, wenn die Kraft durch den ersten Druckabschnitt (43) aufgebracht wird, die Trägerplatte (41) horizontal gehalten wird und der Gondelabschnitt (20) gekippt wird, während er sich um die erste Drehachse dreht,
wobei die Neigungskorrekturvorrichtung ferner Folgendes umfasst:
einen Gierantriebsabschnitt (50), der an der Trägerplatte (41) vorgesehen ist, um den Gondelabschnitt (20) in Bezug auf den Turmabschnitt (30) zu gieren;
einen ersten Zahnradabschnitt (53), der auf einer dritten Drehwelle (52) des Gierantriebsabschnitts (50) vorgesehen ist; und
einen zweiten Zahnradabschnitt (54), der in dem Turmabschnitt (30) vorgesehen ist und mit dem ersten Zahnradabschnitt (53) in Eingriff steht,
wobei in einem Zustand, in dem der erste Zahnradabschnitt (53) mit dem zweiten Zahnradabschnitt (54) in Eingriff steht, der Gierantriebsabschnitt (50) bewirkt, dass der Gondelabschnitt (20) in Bezug auf den Turmabschnitt (30) giert.

## Revendications

1. Dispositif de correction d'inclinaison pour un générateur d'énergie éolienne, le dispositif de correction d'inclinaison comprenant :
une pale (10) entraînée en rotation par l'énergie éolienne ;
une partie de nacelle (20) configurée pour inclure un arbre d'entraînement (21) connecté à la pale (10) et un générateur électrique (23) connecté à l'arbre d'entraînement (21) pour générer de l'énergie électrique ;
une partie de tour (30) couplée à la partie de nacelle (20) ; et
une partie de réglage d'inclinaison (40) configurée pour régler l'arbre d'entraînement (21) qui est placé horizontalement pour être incliné vers le haut ou vers le bas, dans lequel une inclinaison de la pale (10) est ajustée pour que la pale (10) fasse face au vent,
**caractérisé en ce que**
la partie de réglage d'inclinaison (40) comprend :
une plaque de support (41) couplée à la partie de tour (30) dans une direction horizontale ;
dans lequel la partie de réglage d'inclinaison (40) comprend en outre :
un premier arbre de rotation (42) prévu sur un côté de la plaque de support (41) et configuré pour supporter de manière rotative la partie de nacelle (20) ; et
une première partie de pression (43) prévue sur l'autre côté de la plaque de support (41) et
configurée pour fournir une force pour que la partie de nacelle (20) tourne autour d'un premier axe de rotation, et
lorsque la force est appliquée par la première partie de pression (43), la plaque de support (41) est maintenue horizontalement et la partie de nacelle (20) est inclinée tout en tournant autour du premier axe de rotation,
dans lequel le dispositif de correction d'inclinaison comprend en outre :
une partie d'entraînement en lacet (50) prévue sur la plaque de support (41) pour incliner la partie de nacelle (20) par rapport à la partie de tour (30) ;
une première partie d'engrenage (53) prévue sur un troisième arbre de rotation (52) de la partie d'entraînement en lacet (50) ; et
une seconde partie d'engrenage (54) prévue dans la partie de tour (30) et en prise avec la première partie d'engrenage (53),
dans lequel, dans un état où la première partie d'engrenage (53) est en prise avec la seconde partie d'engrenage (54), la partie d'entraînement en lacet (50) agit pour mettre en lacet la partie de nacelle (20) par rapport à la partie de tour (30).
